# EUROPEAN PATENT APPLICATION

(11) **EP 4 394 234 A1**
(43) Date of publication of application: **03.07.2024**
(21) Application number: 23383384.7
(22) Date of filing: 27.12.2023
(51) Int. Cl.: F17C 7/00

(54) **PORTABLE AND AUTONOMOUS EQUIPMENT FOR SUPPLYING HYDROGEN.**

(30) Priority: 27.12.2022 ES 202232168 U
(71) Applicant: Equipos Moviles de Campaña Arpa, S.A.U., 50198 La Muela Zaragoza (ES)
(72) Inventor: ARPA AZOFRA, CLARA, 50198 LA MUELA (ES)
(74) Representative: Espiell Gomez, Ignacio

(57) **Abstract**

The present invention relates to portable and autonomous equipment for supplying hydrogen comprising at least one transportable and autonomous hydrogen dispensing unit (1) formed from a compact structure (2) in the form of a casing with a nozzle (5) integrated therein to be able to dispense hydrogen stored therein. The structure (2) comprises, for dispensing, pneumatic valves or electric valves, an electrical panel and a gas panel with multi-protocol dispensing control, with flow and dispensing pressure regulation linearly or proportionally and a payment system (11) further comprising at least one electrical inlet connection (3), a hydrogen hose outlet connection (4), a nozzle (5) with a hose and a support (6) for the nozzle. Said structure (2) comprises a rear housing (13) suitable as a replaceable hydrogen reservoir which is made up of a cage (14) of pressurised hydrogen bottles (15). The structure (2) comprises an additional bypass connection (16) for connecting to other hydrogen reservoirs. In addition, it has, at the bottom, a base (2a) provided with openings (2b) suitable for the insertion of forks from a transport forklift or cart. It further comprises a hydrogen generation plant (17) made up of at least one modular structure (18) suitable for being transported by a lorry with means to produce green hydrogen and store it under pressure in bottles (15) incorporated in cages (14). The structure (18) comprises means for water osmotisation, hydrogen generation, hydrogen compression and a gas panel, and at least one tank (22) to contain low-pressure hydrogen and at least one housing (23) for high-pressure hydrogen. The generation plant (17) comprises a raw water inlet (25) and an electrical supply connection (26).

## Description

### OBJECT OF THE INVENTION

The invention, as stated in the title of the present specification, relates to portable and autonomous equipment for supplying hydrogen which contributes, to its intended use, advantages and features, which are described in detail further on, which imply an improvement in the current state of the art.

The object of the present invention is a device for supplying hydrogen that, intended to provide hydrogen, preferably green hydrogen, where it is required, e.g. for mobility of multiple machines, such as drones, forklifts, heavy transport and light transport, etc., is advantageously distinguished by consisting of a portable and autonomous assembly that, at least, comprises a transportable and autonomous hydrogen dispensing unit, made up of a transportable compact structure, which has one or more nozzles and the necessary elements to dispense hydrogen housed therein, preferably stored under pressure in caged cylinders. In addition, in a preferred embodiment option, the equipment also comprises a hydrogen generation plant which, in turn, is made up of at least one portable and autonomous modular structure that has means to produce green hydrogen, preferably, the hydrogen from the pressurised hydrogen cylinders that feed the dispenser.

### FIELD OF APPLICATION OF THE INVENTION

The field of application of the present invention falls within the sector of the industry dedicated to the manufacture of supply equipment for dispensing and generating fluids, focusing particularly on the field of those intended for dispensing and generating hydrogen, and more specifically green hydrogen.

### BACKGROUND OF THE INVENTION

As is known, hydrogen, and in particular green hydrogen, that is, hydrogen obtained through the use of renewable energy for its production, which is why it is also called renewable hydrogen, is a clean fuel source with many possibilities, since it already offers a zero-emission solution, not only as a fuel for transportation, in addition to serving as energy, for industries and buildings, but as a raw material.

However, currently there are still very few supply and generation points for this fuel that exist in the territory, which, in turn, means that the implementation of its use as a substitute for more traditional and contaminating fuels is slower and more complicated, when it would be desirable to have as many supply points as possible to facilitate the energy transition.

That is why an essential object of the present invention is the development of portable and autonomous equipment that allows said supply to be offered in a practical and economical manner at any point deemed appropriate, without the need for large civil works for building and constructing infrastructures, but simply based on hydrogen dispensing units stored under pressure in cylinders, allowing its consumption to be implemented anywhere and spread quickly and cheaply throughout the territory.

Furthermore, a secondary object of the present invention is, in turn, the development of equipment that, in addition to dispensing hydrogen, is also capable of generating it in equally transportable and autonomous modules, capable of being installed next to the dispensers, thereby providing the possibility of guaranteeing general supply at multiple points and any location to give access to its use to all potential consumers who, otherwise, would not be able to reach it.

Furthermore, and as a reference to the current state of the art, it should be noted that at least the applicant is unaware of the existence of any other equipment for supplying hydrogen, or any other invention of similar application, which presents technical features that are the same or similar to those presented by that which is claimed herein.

### DESCRIPTION OF THE INVENTION

The equipment for supplying hydrogen proposed by the invention is configured as the ideal solution to the aforementioned objective, the characterizing details that make it possible and that distinguish it being conveniently included in the final claims that accompany this description.

Specifically, what the invention proposes, as noted above, is a device for supplying hydrogen that, intended to provide hydrogen, preferably green hydrogen, wherever it is required, has the advantage of being easily transportable and completely autonomous, allowing its installation in any location.

To this end, and more specifically, the supply equipment comprises at least one transportable and autonomous hydrogen dispensing unit, which is made up of a compact structure, of dimensions suitable for being transported in a conventional transport vehicle, such as a lorry, and which has, integrated therein, all the necessary elements to be able to dispense hydrogen also stored therein, preferably stored under pressure in caged cylinders.

Furthermore, in a preferred embodiment, the supply equipment of the invention also comprises a hydrogen generation plant that is made up of at least one compact modular structure, which in turn is also transportable on a similar and autonomous lorry or transport vehicle, has the necessary means and devices to produce green hydrogen, preferably, hydrogen that is stored under pressure in caged cylinders that serve to fuel the dispensing unit.

In this way, there are multiple advantages provided by the supply equipment.
- Specifically, due to the hydrogen dispensing unit being portable and autonomous, performing underground work and major civil works is avoided.
- Preferably, the dispensing unit is designed to accept 500 bar TPED type bottles, in such a way that it avoids the need for a hydrogen compressor at the dispensing point at standard average pressure 350 bars. It is, therefore, a low-consumption dispenser, as it does not require a compressed air compressor to control the pneumatic valves. It is possible to avoid the use of a compressed air compressor thanks to the use of auxiliary support bottles of Nitrogen, the gas through which we control these pneumatic valves.
- Preferably it has a gas panel with multi-protocol dispensing control, controlling dispenser flow and pressure linearly or proportionally.
- It provides a quickly available dispensing point.
- It provides a multipurpose dispensing point, with the ability to dispense for mobility wherever required, multiple machines, such as drones, forklifts, heavy transport and light transport.
- It is also a dispenser also suitable for refilling bottles.
- It is a dispenser with the capacity to integrate more than one pressure nozzle from a different branch.
- It is a dispenser with a rear housing for a replaceable hydrogen reservoir, preferably a replaceable bottle cage.
- It is a dispenser that integrates a bypass, or branch circuit, providing the possibility of connecting to other hydrogen reservoirs, thus increasing the dispensing capacity and/or causing the dispensing ramp.
- Thanks to said bypass, it is a dispenser with scalable dispensing capacity according to the seasonal dispensing need of the point where it is located.
- It is a dispenser that integrates all the necessary elements for dispensing hydrogen and its storage in service, as well as security and signage.

As for the hydrogen generation plant, the advantages that it provides to the supply equipment are, among others:
- It is a 5.0 green hydrogen generation plant with electricity supply of renewable origin, e.g. for energy communities, industrial estates or renewable parks, with membrane electrolysis technology, in a multi-stage arrangement, each independent stage with a capacity per stage of more than one kilo of hydrogen/day.
- It is a plant with the capacity to regulate the hydrogen generation flow rate without reducing the performance or useful life of the electrolysis system thanks to its specific plant balance that measures the available electrical energy and channels it to each of the stage of hydrogen generation.
- It is a containerisable hydrogen generation plant.
- It is a transportable hydrogen generation plant.
- It is a plug and play hydrogen generation plant without underground or civil works.
- It is a scalable hydrogen generation plant, the design being adapted to the availability of electrical energy (e.g. surplus level) and seasonal hydrogen demand.
- It is a plant with the capacity to compress hydrogen up to the necessary pressure level, e.g. 200 bars, 500 bars or 900 bars.
- It is a plant with the capacity to bottle compressed hydrogen in cageable hydrogen bottles, also in 500 bar TPED bottles, to be able to be transported and avoid the need for a hydrogen compressor at the point of consumption. It can supply several consumption points in the nearby area with a single plant.
- It is a plant that is segmented into modules with standard container dimensions or into more than one container, according to capacity and design.
- It is a plant that integrates all the elements necessary for hydrogen generation, its compression and storage as well as water treatment, security and signage.
- The origin of the raw water for hydrogen generation can be salt water, fresh water or even from the water resulting from the treatment of suitable waste from a secondary source.

### DESCRIPTION OF THE DRAWINGS

To complete the description, and for the purpose of helping to make the features of the invention more readily understandable, this description is accompanied by a set of drawings constituting an integral part of the same, which by way of illustration and not limitation represents the following:
Figures 1 and 2 show perspective views of an exemplary embodiment of the transportable and autonomous hydrogen dispensing unit that comprises the equipment object of the invention, showing its general configuration and its main parts;
Figure 3 shows another perspective view of the dispensing unit of the equipment of the invention, according to the example shown in figures 1 and 2, in this case including a hydrogen cylinder cage attached to the rear housing and a second cylinder cage as an additional reservoir schematically connected via bypass;
Figure 4 shows a perspective view of an example of the hydrogen generation plant that comprises the equipment of the invention in its preferred embodiment, showing the general configuration of the module that makes it up; and
Figure 5 shows a perspective view of an example of the caged cylinders produced by the plant in Figure 4 to supply the dispensing unit of Figures 1 to 3.

### PREFERRED EMBODIMENT OF THE INVENTION

In view of the aforementioned figures, and in accordance with the adopted numbering, one may observe therein a non-limiting exemplary embodiment of the portable and autonomous equipment for supplying hydrogen of the invention, comprising that which is described in detail below.

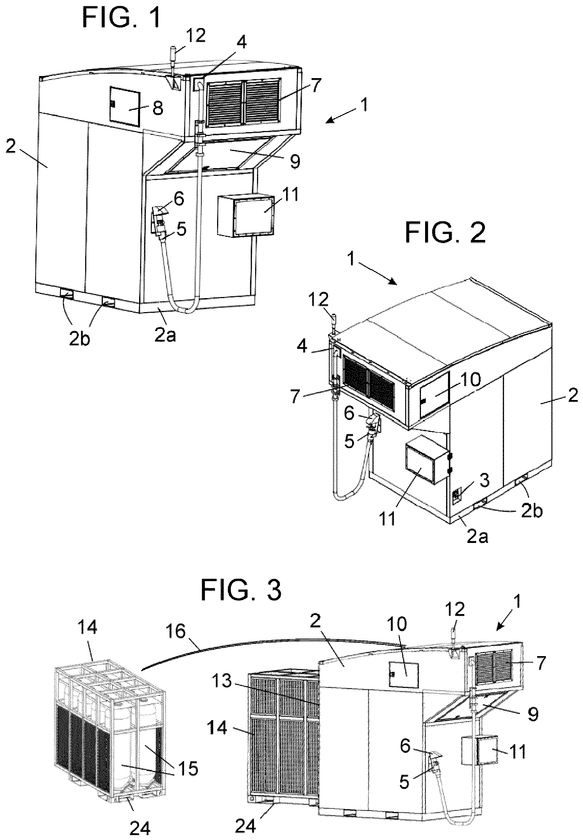

Thus, taking into account Figures 1 and 2, an exemplary embodiment of the transportable and autonomous hydrogen dispensing unit (1) is observed, which, at least, comprises the equipment of the invention, a unit that is essentially made up of a compact structure (2) in the form of a closed metal casing or cabinet, with dimensions suitable for being transported in a conventional transport vehicle, which comprises integrated therein the necessary elements to be able to dispense hydrogen stored therein through at least one nozzle (5), specifically by means of at least one set of pneumatic valves, or low consumption electric valves, connected to an electrical panel and a gas panel with multi-protocol dispensing control, with flow and dispensing pressure regulation linearly or proportionally (element not shown in the figures) using a payment system (11).

For this purpose, preferably, said structure (2) of the dispensing unit (1) also comprises, at least, an electrical inlet connection (3), a hydrogen hose outlet connection (4), a nozzle (5) with a hose, and a support (6) for the nozzle.

Likewise, the structure of the dispensing unit preferably has, externally, a ventilation grate with an extractor (7), a nozzle maintenance service hatch (8), a hydrogen gas panel maintenance service hatch (9), an electrical panel maintenance service hatch (10), a payment drawer (11) for self-service and a gas detection beacon (12).

It is important to note that, to facilitate the transfer and transportation operations of the dispensing unit (1), preferably, the structure (2) in the form of a casing thereof has at the bottom a base (2a) provided with openings (2b) sized and located at the precise distance so that they are suitable for the insertion of the forks of a transport forklift or cart, facilitating the loading and unloading thereof.

In any case, the structure (2) of the dispensing unit (1) preferably has a rear housing (13) suitable as a replaceable hydrogen reservoir.

Preferably, the exchangeable hydrogen in said reservoir is made up of a cage (14) of pressurised hydrogen bottles (15).

Optionally, the structure of the dispensing unit (1) has an additional bypass connection (16) to connect to other hydrogen reservoirs, for example a second cage (14) of bottles (15), as shown in Figure 3.

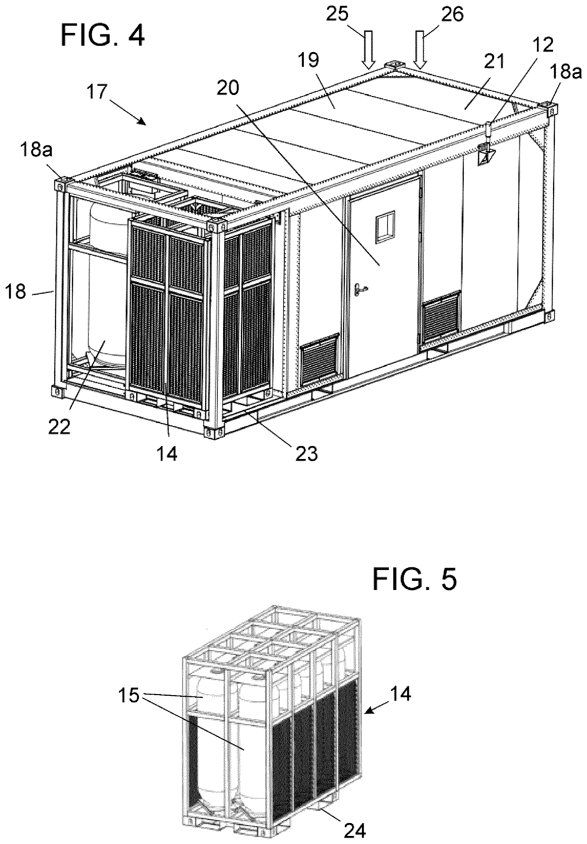

Likewise, looking at Figure 4, an exemplary embodiment of the hydrogen generation plant (17) is observed that comprises the equipment of the invention in a preferred embodiment, which is made up of at least one modular structure (18) with standard container dimensions, suitable for being transported by a lorry or transport vehicle, has the necessary means and devices to produce green hydrogen autonomously and, preferably, store it under pressure in bottles (15) incorporated in cages (14).

Preferably, the modular structure (18) of the hydrogen generation plant (17) is a container frame that includes, on each of the edges thereof, the relevant holes (18a) for the insertion of hooks or other anchoring means that facilitate lifting and unloading operations to place the assembly on the trailer of a lorry or similar transport.

To this end, said structure (18) preferably comprises, housed inside a closed space (19), on the one hand the means and devices for generating hydrogen, that is, means for water osmotisation, hydrogen generation, hydrogen compression and a gas panel, (not visible in the figures), which are accessed from a side door (20), and, on the other hand, the electrification, monitoring, balance and plant control panel that allow the management and control of said hydrogen generation, and which are accessed from another front door (21).

Furthermore, outside said closed space (19), the modular structure (18) comprises at least one tank (22) to contain low-pressure hydrogen and at least one housing (23) for high-pressure hydrogen. Preferably for bottles (15) in easily transportable cages (14), for example when incorporated on pallet-type supports (24), as seen in Figure 5, which allow the insertion of the forks of a forklift or transport cart, such that they are easily usable by the described dispensing unit (1) of the equipment. On the outside of the structure (18), the existence of at least one gas detection beacon (12) is also considered.

In any case, the generation plant (17) comprises a raw water inlet (25) and an electrical supply connection (26) from surplus electricity from renewable energies, which may belong to third-party facilities located in the vicinity of the point at which the plant (17) is installed or even be incorporated into the structure (18) of the hydrogen generation plant (17), for example in the form of solar panels.

With all this, the equipment of the invention can provide a complete green hydrogen supply system, which, after being generated in the transportable and autonomous generation plant (17), can be carried in the bottle (15) cages (14) by any transport system, to a dispensing unit (1) which, in turn, will have been located at any point required, as it is also a portable element that is easily transportable, for example to electric stations and consumption or electrification points by hydrogen-based fuel cell, either for remote locations, hospitals or emergency stations, or for supplying industries, such as furnaces or steel mills, or for heating systems for the tertiary sector.

Having sufficiently described the nature of the present invention, as well as the ways in which it may be implemented, it is not considered necessary to elaborate on the explanation thereof in order for a person skilled in the art to understand the scope of the invention and the advantages derived therefrom.

## Claims

1. A portable and autonomous equipment for supplying hydrogen **characterised in that** it comprises at least one transportable and autonomous hydrogen dispensing unit (1) formed from a compact structure (2) in the form of a casing comprising a nozzle (5) integrated therein to be able to dispense hydrogen stored therein.

2. The portable and autonomous equipment for supplying hydrogen, according to claim 1, **characterised in that** the structure (2) of the dispensing unit (1) comprises, for dispensing, pneumatic valves or electric valves, an electrical panel and a gas panel with multi-protocol dispensing control, with flow and dispensing pressure regulation linearly or proportionally and a payment system (11).

3. The portable and autonomous equipment for supplying hydrogen, according to claim 1 or 2, **characterised in that** the structure (2) of the dispensing unit (1) further comprises at least one electrical inlet connection (3), a hydrogen hose outlet connection (4), a nozzle (5) with a hose and a support (6) for the nozzle.

4. The portable and autonomous equipment for supplying hydrogen, according to any of claims 1 to 3, **characterised in that** the structure (2) of the dispensing unit (1) comprises a rear housing (13) suitable as a replaceable hydrogen reservoir.

5. The portable and autonomous equipment for supplying hydrogen, according to claim 4, **characterised in that** the replaceable hydrogen of said reservoir is made up of a cage (14) of pressurised hydrogen bottles (15).

6. The portable and autonomous equipment for supplying hydrogen, according to claim 4 or 5, **characterised in that** the structure (2) of the dispensing unit (1) comprises an additional bypass connection (16) for connecting to other hydrogen reservoirs.

7. The portable and autonomous equipment for supplying hydrogen, according to any of the preceding claims, **characterised in that** the structure (2) in the form of a casing has, at the bottom, a base (2a) provided with openings (2b) sized and located at the precise distance so that they are suitable for the insertion of the forks from a transport forklift or cart.

8. The portable and autonomous equipment for supplying hydrogen, according to any of the preceding claims, **characterised in that** it further comprises a hydrogen generation plant (17) made up of at least one modular structure (18) of standard container dimensions, suitable for being transported by a lorry or transport vehicle, which comprises means to autonomously produce green hydrogen.

9. The portable and autonomous equipment for supplying hydrogen, according to claim 8, **characterised in that** the hydrogen generation plant (17) comprises means to generate green hydrogen and store it under pressure in bottles (15) incorporated in cages (14) that serve to supply the dispensing unit (1).

10. The portable and autonomous equipment for supplying hydrogen, according to claim 8 or 9, **characterised in that** the structure (18) comprises, housed inside a closed space (19), means for water osmotisation, hydrogen generation, hydrogen compression and a gas panel, as well as an electrification, monitoring, balance and plant control panel.

11. The portable and autonomous equipment for supplying hydrogen, according to claim 10, **characterised in that** the structure (18) comprises, outside said closed space (19), at least one tank (22) to contain low-pressure hydrogen and at least one housing (23) for high-pressure hydrogen.

12. The portable and autonomous equipment for supplying hydrogen, according to any of claims 8 to 11, **characterised in that** the generation plant (17) comprises a raw water inlet (25) and an electrical supply connection (26).

13. The portable and autonomous equipment for supplying hydrogen, according to any of claims 8 to 12, **characterised in that** the modular structure (18) of the hydrogen generation plant (17) is a container frame that includes, on each of the edges thereof, holes (18a) for the insertion of hooks or other anchoring means that facilitate lifting and unloading operations.
